# EUROPEAN PATENT APPLICATION

(11) **EP 4 772 378 A1**
(43) Date of publication of application: **08.07.2026**
(21) Application number: 25206024.9
(22) Date of filing: 01.10.2025
(51) Int. Cl.: B60K 35/10, B60K 35/22, B60K 35/53

(54) **DISPLAY MODULE**

(30) Priority: 03.01.2025 KR 20250001110
(71) Applicant: Hyundai Mobis Co., Ltd., Gangnam-gu Seoul 06141 (KR)
(72) Inventor: KIM, Kyung Hoon, 16891 Yongin-si, Gyeonggi-do (KR)
(74) Representative: Jung, Minkyu

(57) **Abstract**

A display module includes a center display that moves up and down, and a control plate spaced a predetermined distance apart from a front surface of the center display. The control plate is disposed to cover at least a portion of the center display, the center display includes a plurality of display regions, and the control plate forms edges of at least two of the plurality of display regions.

## Description

### CROSS REFERENCE TO RELATED APPLICATION

This application claims priority to and the benefit of Korean Patent Application No. 10-2025-0001110, filed on January 3, 2025, the disclosure of which is incorporated herein by reference in its entirety.

### BACKGROUND

### 1. Field of the Invention

The present invention relates to a display module, and more particularly, to a display module including a display that is vertically movable.

### 2. Description of Related Art

As the time that people spend inside vehicles has increased, the functions that the vehicles provide to users are also becoming more diverse. Various display devices are provided inside vehicles for the convenience of users, and the users can easily control various functions of the vehicles and enjoy the functions such as media playback through the display devices.

There is a need to provide displays of sufficient size in limited spaces inside vehicles. Displays provided inside vehicles need to be disposed in limited spaces inside the vehicles, and the displays need to be disposed in appropriate locations to ensure the safety of the drivers and users.

There is a growing demand for displays that can provide various functions in terms of both user convenience and safety.

### SUMMARY

One embodiment of the present invention is directed to providing a display module that is easy for a driver to operate and can display and control various functions.

The task to be solved by the present invention is not limited to the task described above, and other tasks not described herein will be clearly understood by those skilled in the art from the description below.

A display module according to one embodiment of the present invention includes a center display configured to move up and down, and a control plate spaced a predetermined distance apart from a front surface of the center display.

The control plate is disposed to cover at least a portion of the center display, the center display includes a plurality of display regions, and the control plate forms edges of at least two of the plurality of display regions.

The portion of the center display covered by the control plate according to some embodiments may be configured to display a plurality of buttons, and the buttons may be projected through the control plate.

The control plate according to some embodiments may extend in a width direction of the center display and cover both sides of the center display.

When the center display according to some embodiments moves, a size of a display region displayed on the center display may be set to a region partitioned by an upper or lower edge of the control plate and a boundary of the center display.

The center display according to some embodiments may include a first window disposed on an upper side of the control plate and a second window disposed on a lower side of the control plate.

The first window and the second window according to some embodiments may exchange display content with each other based on an operation of a user.

The first window or the second window according to some embodiments may be configured to display a plurality of widgets, and when the user selects at least one widget through a gesture, the control plate may be linked to the at least one widget.

When areas of the first window and the second window according to some embodiments are different, the display content may be set to correspond to the displayed window.

The center display according to some embodiments may include a background region displayed in the entire region on the upper side of the control plate, and the first window may be configured to be displayed to overlap a portion of the background region that is adjacent to an upper edge of the control plate.

A size of the first window according to some embodiments may be configured to be adjusted by dragging an upper edge of the first window, and the first window may configured to display an image inserted at a rear surface of the control plate by dragging the upper edge of the first window downward.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a view showing a center display and a control plate according to an embodiment of the present invention;
FIG. 2 is a perspective view of the center display and the control plate according to the embodiment;
FIG. 3 is a view showing a state in which the center display according to the embodiment has moved upward;
FIG. 4 is a view showing a state in which the center display according to the embodiment has moved downward;
FIG. 5 is a view showing a display method of the center display according to the embodiment;
FIGS. 6 and 7 are views showing states in which the display content of the center display according to the embodiment changes;
FIG. 8 is a view showing a background region according to the embodiment;
FIG. 9 is a view showing the proportion of the background region according to the embodiment; and
FIG. 10 is a view showing an additional region according to the embodiment.

### DETAILED DESCRIPTION

The present invention may be modified in various ways and has various embodiments, and specific embodiments are illustrated in the drawings and will be described in detail. However, this is not intended to limit the present invention to any particular embodiment, and it is to be understood to include all modifications, equivalents, or substitutions that fall within the scope of the ideas and techniques of the present invention. In describing the present invention, when it is determined that a detailed description of a related known technology may obscure the gist of the present invention, the detailed description thereof is omitted.

Although the terms "first," "second," and the like may be used to describe various components, the components are not limited by the above terms. The above terms are used solely to distinguish one component from another.

The terminology used in the present application is used only to describe particular embodiments and is not intended to limit the present invention. Singular expressions include plural expressions unless the context clearly indicates otherwise. In the present application, it should be understood that terms such as "includes" or "has" are intended to specify the presence of a feature, number, step, operation, component, part or combination thereof described in the specification, but do not exclude in advance the possibility of the presence or addition of one or more other features, numbers, steps, operations, components, parts or combinations thereof.

Also, throughout the specification, when "connected" is described, this does not only mean that two or more components are directly connected, but also that two or more components are indirectly connected through other components, that they are electrically connected as well as physically connected, or that they are referred to by different names depending on location or function but are one.

Additionally, when one component is described as being formed or disposed "above (upper) or below (lower)" another component, above (upper) or below (lower) includes not only cases where the two components are in direct contact with each other, but also cases where one or more still other components are formed or disposed between the two components. Additionally, when expressed as "above (upper) or below (lower)," it may include the meaning of not only the upward direction but also the downward direction based on one component.

Hereinafter, one embodiment of a windshield display according to the present invention will be described in detail with reference to the attached drawings. When describing with reference to the attached drawings, identical or corresponding components are denoted by the same drawing numbers and redundant descriptions thereof are omitted.

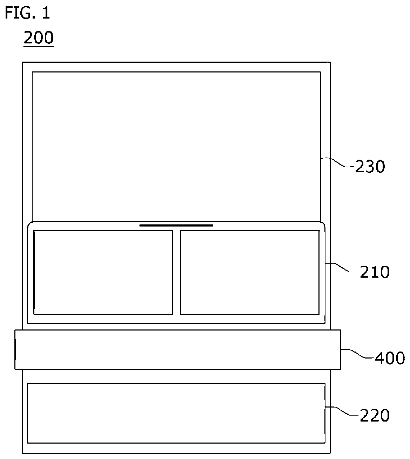

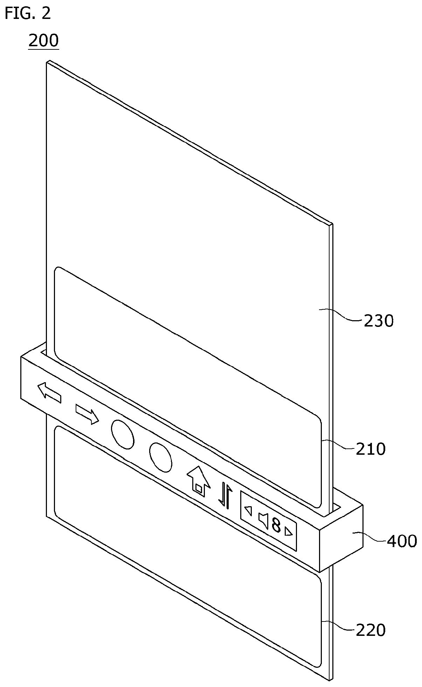

FIG. 1 is a view showing a center display and a control plate according to an embodiment of the present invention, and FIG. 2 is a perspective view of the center display and the control plate according to the embodiment.

Referring to FIG. 1, a display module according to one embodiment of the present invention may include a center display 200 and a control plate 400.

The center display 200 may be disposed to be vertically movable. The position of the center display 200 may be adjusted up and down by a user's operation, and the displayed content may be changed depending on the position.

The control plate 400 may be disposed at the front of the center display 200. The control plate 400 may be disposed spaced a predetermined distance apart from the center display 200. The center display 200 may move up and down, and the control plate 400 may maintain a fixed position. The relative position of the center display 200 may be changed with respect to the control plate 400.

For example, the display module according to the present invention may be disposed at the front of a cockpit module. This is a portion where a center fascia is disposed, and the display module may perform the role of the center fascia.

The center display 200 may be disposed to be vertically movable at the front of a cockpit. The center display 200 may be formed in a flat shape, and may also be formed to include a curved surface considering the shape of the cockpit or the like. In this case, the center display 200 may correspond to a flexible display that can be bent. The curvature of the center display 200 may be changed according to the movement of the center display 200.

The control plate 400 may be fixed to one surface of the cockpit.

As shown in FIG. 2, the control plate 400 may be formed to surround at least a portion of the center display 200. The control plate 400 may be formed to enable operation of the center display 200 at the front of the center display 200.

The control plate 400 may be fixed to the front of the cockpit. The user may operate the center display 200 by operating the control plate 400. Therefore, the control plate 400 may be disposed at a position at which it is easy for the driver and front passenger to operate it.

The center display 200 may be provided such that the user can touch the center display 200. The center display 200 may be operated by touching the front surface of the center display 200. However, when the user's operation is limited, such as when the driver is driving or when movement is restricted due to a seat belt, the user may operate the center display 200 and the functions of the vehicle by operating the control plate 400.

The control plate 400 may be formed of a translucent material. Since the control plate 400 is disposed at the front of the center display 200, the content displayed on the center display 200 may be projected. That is, even when there is no separate display on the control plate 400, content for operating the control plate 400 may be displayed in a region corresponding to the position of the control plate 400 on the center display 200.

The center display 200 may be partitioned into a plurality of regions. The center display 200 may include a plurality of display regions. The plurality of display regions may display different content, and the sizes and positions of the display regions may also change as the center display 200 moves.

Since the control plate 400 is disposed at the front of the center display 200, the control plate 400 may form a portion of the edge of the display region. The control plate 400 may extend transversely from the front of the center display 200. The control plate 400 may cover one transversely extending region of the center display 200.

The control plate 400 may form the edge of at least some of the display region. As shown in FIG. 1, the display region may be formed on each of upper and lower sides of the control plate 400. The control plate 400 may form a portion of the edge of the display region. Since the control plate 400 maintains a fixed position even when the center display 200 moves, the corresponding edge may be maintained. Accordingly, the other edge that is not formed by the control plate 400 may move, and the size and arrangement of the display region may be changed.

The center display 200 may include a plurality of display regions. The center display 200 shown in FIG. 1 may include a total of three display regions. The center display 200 may be partitioned into a plurality of display regions. Each of the display regions may display different information and content.

Since the control plate 400 covers at least a portion of the center display 200 at the front of the center display 200, the display region may be partitioned based on the control plate 400.

Referring to FIG. 1, a total of three display regions are formed. The display region may include a first window 210 and a second window 220. Additionally, the display region may include a background region 230.

The display region may be formed in such a way that a plurality of windows overlap. That is, the display region may include a plurality of window layers. The background region 230 may correspond to the display region at the bottom. In the case of this embodiment, the first window 210 may be displayed to cover the background region 230.

The first window 210 and the second window 220 may be disposed on both sides of the control plate 400. The edges of the first window 210 and the second window 220 may correspond to the edge of the control plate 400.

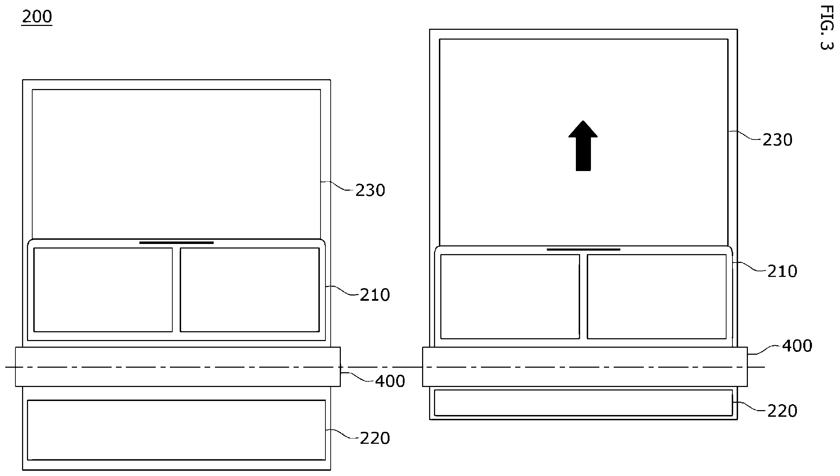

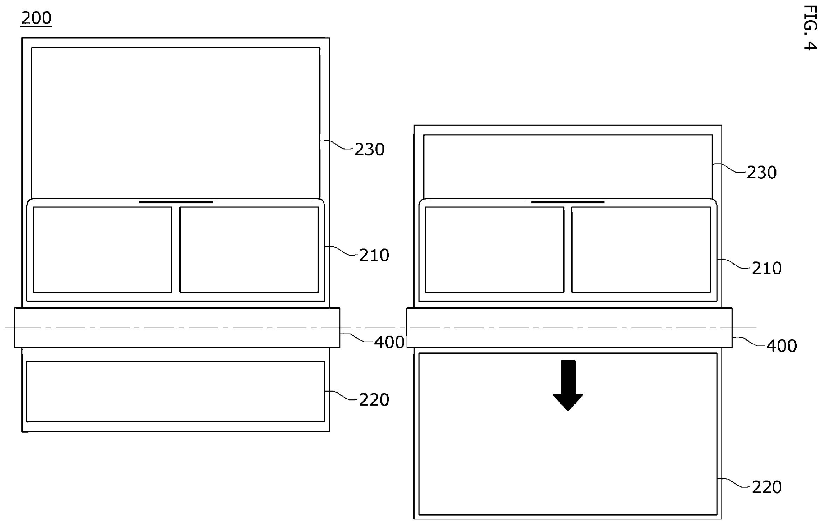

FIG. 3 is a view showing a state in which the center display according to the embodiment has moved upward, and FIG. 4 is a view showing a state in which the center display according to the embodiment has moved downward.

Referring to FIGS. 3 and 4, the states in which the control plate 400 may maintain a fixed position while the center display 200 moves up and down are seen.

The position of the center display 200 may be adjusted linearly, or alternatively, may be adjusted stepwise. When adjusted linearly, the position of the center display 200 may be set within a range between the maximum height and the minimum height.

When adjusted stepwise, the height of the center display 200 may be adjusted to a preset height. For example, the center display 200 may be disposed in upper, middle, and lower positions. The following description is based on the case where the center display 200 is in the middle position.

When the position of the center display 200 is the middle position, it corresponds to the left drawings of FIGS. 3 and 4. When the center display 200 moves upward based on the corresponding height, the center display 200 may be placed at the upper position, and when the center display 200 moves downward, the center display 200 may be placed at the lower position.

The control plate 400 may maintain a fixed position. FIGS. 3 and 4 show the position of a center line of the control plate 400. The center line of the control plate 400 may remain a fixed position, and only the center display 200 may move up and down. Since the control plate 400 is disposed at a predetermined distance from the center display 200, the control plate 400 may not interfere with the movement of the center display 200.

The display content of the center display 200 may change depending on the arrangement of the center display 200. As the relative arrangement of the center display 200 and the control plate 400 changes, the size of the display region displayed on the center display 200 may also change.

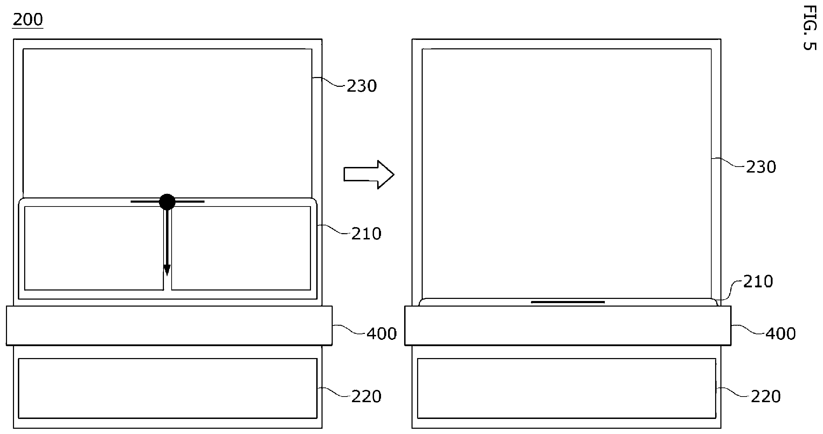

FIG. 5 is a view showing a display method of the center display according to the embodiment.

Referring to FIG. 5, in the center display 200 according to the embodiment, the size of a specific display region may be adjusted by the user's operation. The first window 210 and the second window 220 may be displayed on the upper and lower sides of the control plate 400, respectively. The first window 210 may be disposed on the upper side of the control plate 400. The user may adjust the size of the first window 210 by dragging the edge of the first window 210.

When the upper edge of the first window 210 is dragged downward as shown in FIG. 5, the first window 210 may display an image inserted into a rear end of the control plate 400. The first window 210 may be displayed as if it was inserted into the rear end of the control plate 400, and the background region 230 formed on a rear surface of the first window 210 may be displayed. The background region 230 may be displayed in the entire region on the upper side of the control plate 400.

A region in which display content projected onto the control plate 400 is displayed may be formed in a region of the center display 200 corresponding to the region where the control plate 400 is disposed. The corresponding region may be formed to overlap the control plate 400. The corresponding region may be a control region.

The content displayed in the control region may be displayed through the control plate 400. The corresponding region may be formed between the first window 210 and the second window 220. The first window 210 and the second window 220 may correspond to display regions substantially partitioned by the control region. The first window 210 may be displayed on an upper side of the control region, and when the user drags the upper edge of the first window 210 downward, an image of the first window 210 being inserted into a rear surface of the control region may be displayed.

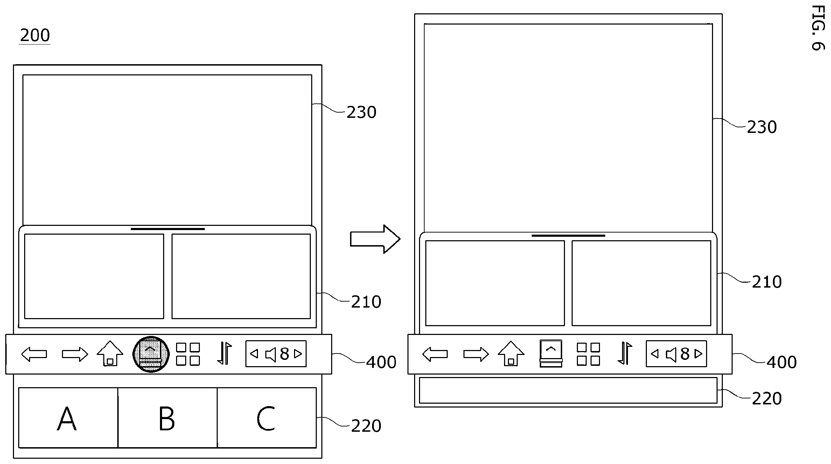

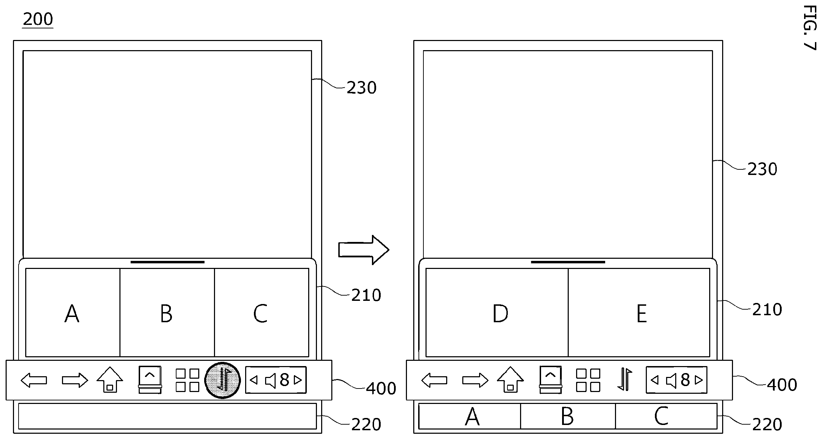

FIGS. 6 and 7 are views showing states in which the display content of the center display according to the embodiment is changed.

Referring to FIG. 6, it is shown that the content displayed in the display region changes depending on the arrangement of the center display 200 according to the embodiment of the present invention.

When the center display 200 moves upward, the display content of the first window 210 or the second window 220 of the center display 200 may be changed. As shown in FIG. 6, a button for operating the center display 200 may be displayed in the control region of the center display 200 that overlaps the control plate 400. The control plate 400 may be formed of a transparent material. The content displayed in the control region through the transparent control plate 400 may be recognized by the user.

The control region may display buttons that can operate various functions of the center display 200. The buttons may include buttons for operating the position of the center display 200.

When a button for arranging the center display 200 upward is touched, the center display 200 may move upward as shown in FIG. 6.

FIG. 6 shows a state in which the content displayed on the second window 220 disposed at the lower side of the control plate 400 is changed. The second window 220 may be a region displayed on a lower side of the center display 200. The second window 220 may correspond to a display region surrounded by the lower edge of the center display 200 and the lower edge of the control plate 400. As the center display 200 rises, the width of the second window 220 may narrow.

The height of the second window 220 may be reduced by the same amount as the center display 200 rises. Before the center display 200 rises, three widgets may be displayed in the second window 220. After the center display 200 rises, there may be no separate display content in the second window 220. As the width of the second window 220 becomes narrower, the size of the region may not be sufficient to display specific information, and in this case, the displayed content may disappear.

Alternatively, the displayed content may be maintained, and the displayed content may be reduced. The displayed content may be reduced to fit the up-down width, and some of the displayed content may disappear while the rest of the content is displayed.

FIG. 7 is a view showing a state in which the display content of the first window 210 and the second window 220 is switched. The control plate 400 may display a button for switching the display content of the first window 210 and the second window 220.

When the user touches the corresponding button, the display content of the first window 210 and the second window 220 may be exchanged. The sizes of the first window 210 and the second window 220 may be different, and the changed display content may be set again to fit the size of the changed display region.

In a case in which the area of the first window 210 is larger than that of the second window 220 as shown in FIG. 7, when the content displayed on the first window 210 is displayed in the second window 220, the content may be displayed in a reduced size corresponding to the size of the second window 220.

When the height of the second window 220 is formed small, like the second window 220 shown in FIG. 7, separate information may not be displayed in the second window 220. That is, although the information corresponding to the second window 220 is displayed, the displayed content may disappear in response to the movement of the position of the center display 200. Even in this case, when the display content of the first window 210 and the second window 220 is switched, the content previously displayed in the second window 220 may be displayed in the first window 210.

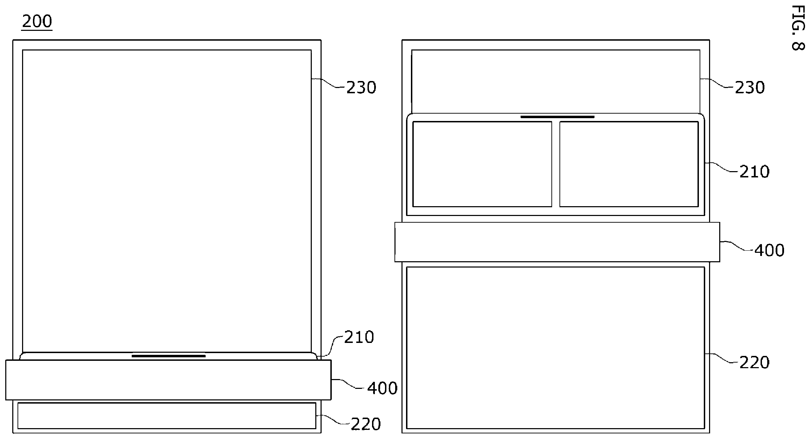

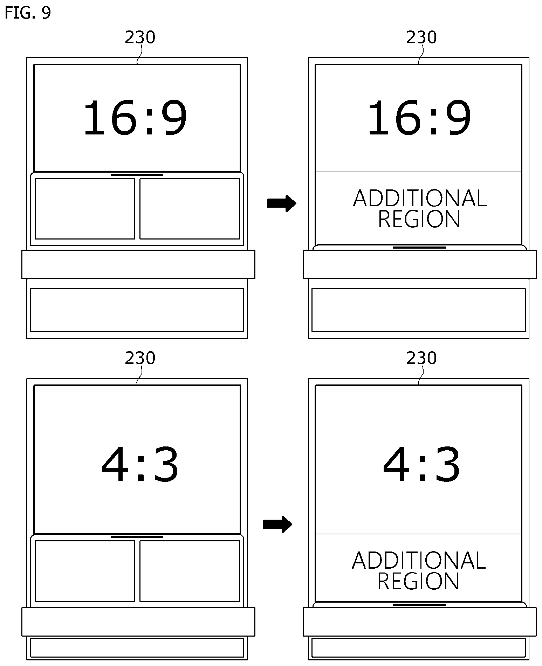

FIG. 8 is a view showing the background region according to the embodiment, and FIG. 9 is a view showing the proportion of the background region according to the embodiment.

Referring to FIG. 8, the maximum and minimum widths in which the background region 230 can be displayed may be confirmed. The background region 230 may be a region formed behind the first window 210. The background region 230 may be expanded when the center display 200 moves upward.

When the first window 210 is reduced while the center display 200 moves upward, the background region 230 may be displayed at the maximum size. The background region 230 may be displayed in a space between an upper side of the center display 200 and the control plate 400.

When the center display 200 moves downward and the first window 210 is displayed at the maximum size, the background region 230 may be displayed at the minimum size.

The user may adjust the proportions of the background region 230 and the first window 210 by adjusting the arrangement of the center display 200 and the size of the first window 210. The user may adjust the size of each region of the center display 200 to fit the content that needs to be displayed.

Since the background region 230 may be displayed in the widest region of the center display 200, media playback functions, navigation functions, and the like may be displayed through the background region 230. The corresponding information may be displayed on a wide screen, allowing the user to easily utilize the functions.

Since the size of the displayed background region 230 can be adjusted, the proportion of the background region 230 may be implemented in various ways. Referring to FIG. 9, when the height of the center display 200 is in the medium position, the background region 230 may be displayed at a ratio of 16:9. When the first window 210 moves downward in the corresponding state, the background region 230 may be displayed through a wider region. The content displayed in the background region 230 may be modified to fit the ratio. Alternatively, the displayed state may be maintained in the entire region including an additional region regardless of the state of the first window 210. That is, the portion displayed in the additional region may be obscured by the first window 210.

When the height of the center display 200 is in the upper position, the background region 230 may be displayed at a ratio of 4:3. When the first window 210 moves downward in that state, the background region 230 may be displayed through a wider region. The content displayed in the background region 230 may be modified to fit the ratio. Alternatively, the displayed state may be maintained in the entire region including an additional region regardless of the state of the first window 210. That is, the portion displayed in the additional region may be obscured by the first window 210.

When the content displayed in the background region 230 has a preset ratio, the position of the center display 200 may be automatically adjusted when displaying the content. At the same time, the size of the first window 210 may also be automatically adjusted. That is, the state of the display module may be optimized for the displayed content.

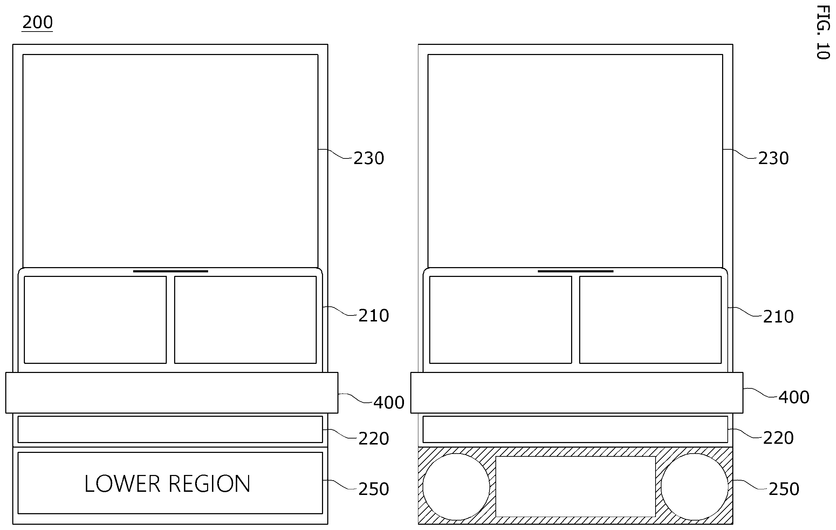

FIG. 10 is a view showing the additional region according to the embodiment.

When the center display 200 moves upward, free space may be formed at a lower end of the center display 200. The lower end of the center display 200 may be exposed by the length that the center display 200 moves.

A lower region 250 of the center display 200 may be covered or exposed by the center display 200 depending on the arrangement of the center display 200. The lower region 250 may be provided with a separate display. The separate display may implement the continuous display of the center display 200. For example, the display in the lower region 250 and the second window 220 may display continuous content. As the center display 200 moves upward, since the size of the second window 220 is reduced, the lower region 250 may compensate for the reduced size.

The operating of the display provided in the lower region 250 may stop while it is obscured by the center display 200. The corresponding display may be activated when the center display 200 moves upward.

A storage space may be formed in the lower region 250 instead of a separate display. The center display 200 may be formed in the center portion of the vehicle where the center fascia is formed. Therefore, the storage space may be a space that is convenient for storing the user's luggage.

A plurality of storage spaces may be formed in the lower region 250 of the center display 200, and the corresponding spaces may be used for storing the user's luggage. The lower region 250 may be provided with a fixed groove into which a container containing a beverage or the like being consumed by a vehicle passenger can be inserted. At the same time, a storage groove that can store small items such as a wallet or a cell phone may be provided.

When the user gets out of the vehicle, such as upon arriving at a destination, the center display 200 may automatically move upward to open the storage space. The user may recognize the stored luggage and take the luggage according to the arrangement of the center display 200 before getting out of the vehicle. When there is luggage stored in the storage space, the center display 200 may notify the user of that fact by providing an alarm or the like.

According to one embodiment of the present invention, a center display is vertically movable, and various functions of a vehicle can be easily controlled by operating a control plate or the center display.

The various beneficial advantages and effects of the present invention are not limited to the above-described content, and will be more easily understood in the process of describing specific embodiments of the present invention.

Although the present invention has been described above with reference to specific embodiments thereof, it will be understood by those skilled in the art that various modifications and changes may be made to the present invention without departing from the spirit and scope of the present invention as set forth in the claims below.

## Claims

1. A display module comprising:
a center display configured to move up and down; and
a control plate spaced a predetermined distance apart from a front surface of the center display,
wherein the control plate is disposed to cover at least a portion of the center display, the center display includes a plurality of display regions, and the control plate forms edges of at least two of the plurality of display regions.

2. The display module of claim 1, wherein the portion of the center display covered by the control plate is configured to display a plurality of buttons, and the buttons are projected through the control plate.

3. The display module of claim 1 or 2, wherein the control plate extends in a width direction of the center display and covers both sides of the center display.

4. The display module of any one of claims 1 to 3, wherein, when the center display moves, a size of a display region displayed on the center display is set to a region partitioned by an upper or lower edge of the control plate and a boundary of the center display.

5. The display module of any one of claims 1 to 4, wherein the center display includes a first window disposed on an upper side of the control plate and a second window disposed on a lower side of the control plate.

6. The display module of claim 5, wherein the first window and the second window exchange display content with each other based on an operation of a user.

7. The display module of claim 5 or 6, wherein the first window or the second window is configured to display a plurality of widgets, and when a user selects at least one widget through a gesture, the control plate is linked to the at least one widget.

8. The display module of claim 6, wherein, when areas of the first window and the second window are different, the display content is set to correspond to the displayed window.

9. The display module of any one of claims 5 to 8, wherein the center display includes a background region displayed in an entire region on the upper side of the control plate, and the first window is configured to be displayed to overlap a portion of the background region that is adjacent to an upper edge of the control plate.

10. The display module of any one of claims 5 to 9, wherein a size of the first window is configured to be adjusted by dragging an upper edge of the first window, and the first window is configured to display an image inserted into a rear surface of the control plate by dragging the upper edge of the first window downward.
